(19) Europäisches Patentamt
European Patent Office
Office européen des brevets

(11) **EP 1 978 369 B1**

(12) **EUROPEAN PATENT SPECIFICATION**

(45) Date of publication and mention
of the grant of the patent:
**03.03.2010 Bulletin 2010/09**

(51) Int Cl.:
***G01P 3/36*** (2006.01)          ***G01P 5/26*** (2006.01)

(21) Application number: **07007278.0**

(22) Date of filing: **07.04.2007**

(54) **Method and device for laser doppler measurement of a velocity field of a fluid flow**

Verfahren und Vorrichtung zur Laser-Doppler-Messung eines Geschwindigkeitsfeldes einer Flüssigkeitsströmung

Procédé et dispositif de mesure de laser doppler du champ de vitesse d'un écoulement de fluide

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**08.10.2008 Bulletin 2008/41**

(73) Proprietors:
• **Deutsches Zentrum für Luft- und Raumfahrt e.V.**
**51147 Köln (DE)**
• **Konstruktorsko-Tehnologicheskii Institut Nauchnogo Priborostroenia Novosibirsk 630058 (RU)**

(72) Inventors:
• **Kompenhans, Jürgen, Dr.**
**37130 Gleichen (DE)**
• **Dubnishchev, Yuriy**
**630058 Novosibirsk (RU)**
• **Chuguy, Yuriy**
**630058 Novosibirsk (RU)**
• **Belousov, Peter**
**630058 Novosibirsk (RU)**
• **Belousov, Pavel**
**630058 Novosibirsk (RU)**

(74) Representative: **Rehberg Hüppe + Partner Patentanwälte Nikolausberger Weg 62 37073 Göttingen (DE)**

(56) References cited:
**US-A- 5 587 785      US-A- 5 991 697**
**US-B1- 6 542 226**

**Description**

## FIELD OF THE INVENTION

The invention relates to a laser Doppler method for measuring a velocity field of a fluid flow, comprising the steps of the preamble of independent claim 1. Further the invention relates to a laser Doppler device for measuring a velocity field of a fluid flow comprising the features of the preamble of independent claim 6.

## PRIOR ART

Methods for visualizing and measuring velocity fields of flows, based on the Doppler frequency shift in the scattered light are known. Among them there is a method of visualizing and measuring a field of velocities, which is described in SU-Patent No 567141 MKI G01 P 3/36 "Method of measurement of velocity field in moving fluid" (authors: Belousov P. Ya. and Dubnishchev Yu. N.) // Discoveries. Inventions (in Russian), 1977, No 28. In this patent, a gas absorption cell is proposed for use as an optical frequency demodulator for visualizing and measuring velocity fields of flows in real-time. The slope of the absorption characteristic of the gas cell is used as a discrimination curve for frequency demodulation of a scattered-light image of a section of a flow irradiated by a laser sheet. The possibility of using various substances having different optical properties as optical frequency demodulators is underlined. For managing the parameters of the frequency transfer function in gas cells it is proposed to use the methods of nonlinear optics and spectroscopy of the saturated absorption. Disadvantages of the method described in this patent are the absence of direct indications on concrete substances for manufacturing the absorption cell, the influence of multi-particle scattering on the results of the measurements, and the necessity of applying an additional reference camera for normalization of the converted image.

Another method of imaging Doppler shifted scattered light has been described in an article by Belousov and Dubnishchev "Visualization of a Flow-Velocity Field", Optika and Spectroscopy (USSR), 52, 524 (1982). In this disclosure, an optical processor with coherent feedback is used to convert frequency shifts into intensity variations using, in one implementation, a semi-confocal interferometer as wide-band spatial frequency filter and the slope of its resonant transfer function as a frequency discrimination curve. The optical Doppler processor is matched to the laser source. It features high sensitivity for low and average frequencies, however its dynamic range is defined by the quality factor of the optical resonator, and expansion of the dynamic range of measurements requires reducing this quality factor, which, in turn, leads to a reduction of sensitivity. Other disadvantages are again the necessary application of an additional reference camera for normalization of the converted image and the influence of the multi-particle scattering on the results of measurements.

In the patent "System for measuring velocity field of fluid flow utilizing a laser-Doppler spectral image converter" (USA Patent 4919536, date of Patent April, 24, 1990, author Hiroshi Komine) the use of iodine vapour absorption cells as the frequency-to-intensity converter, the procedure of normalization of the signal image, and the application of pulsed laser radiation and of methods for pseudo-colouring in processing are described. Disadvantages of this method are the influence of multi-particle scattering on the results of the measurements, the necessity to apply an additional reference camera for normalization of the converted image in each measuring channel, complicated controlling of parameters of the cells, and the impossibility of measuring fields of low velocities (in a range lower than 100 m/s) due to the low steepness of the contour slope of the iodine absorption cell, that is used for the discrimination curve.

Another method of imaging Doppler shifted scattered light has been described in a report by Seiler F., George A., Leopold F., Havermann M., Srulijes J., "Enhanced Doppler Picture Velocimetry (DPV) for Planar Velocity Measurements" In High Speed Shock Tunnel Flow. Proc. of the 10th International Symposium on Flow Visualization, 2002, Kyoto, Japan. In this disclosure, a special wide-field Michelson interferometer was used for measuring a field of velocities. Disadvantages of this method are the influence of multi-particle scattering on results of measurements, the necessity to apply a reference camera, and low sensitivity for measuring velocities in a range lower than 100 m/s.

One further known method, which is disclosed in a report by Miller H., Eggert M., Pape N, Dopheide D., C.Czarske., Butner L., Razik T., "Time resolved DGV based on laser frequency modulation", Conference Proceeding, 12th International Symposium on Applications of Laser Techniques to Fluid Mechanics, 2004, Lisbon, Portugal, published by CD-ROM, Session 25-2, is based on fast switching the laser light illuminating the light section by a well defined frequency shift within one slope of the absorption line of the gas cell. Normalization is achieved by the ratio of frequency-shifted images without having to use any reference camera. Disadvantages of this method are the influence of multi-particle scattering on the results of measurements and a narrow linear dynamic range.

## PROBLEM OF THE INVENTION

It is the problem of the invention to provide a laser Doppler method for measuring a velocity field of a fluid flow, and a laser Doppler device for measuring a velocity field of a fluid flow which are not influenced by multi-particle scattering. Further, the normalization of the spatial light intensity distributions in respect of the light intensity distribution of the scattered light shall be effected without an additional reference camera, and without limitations to the linear dynamic range.

## SOLUTION

The problem of the invention is solved by a laser Doppler method for measuring a velocity field of a fluid flow according to independent claim 1, and by a laser Doppler device for measuring a velocity field of a fluid flow according to independent claim 6. The dependent claims define preferred embodiments of the method and the device.

## DESCRIPTION OF THE INVENTION

In the new method, the normalized spatial light intensity distributions obtained for the different scattering directions are subtracted in pairs to obtain a spatial light intensity difference distribution for each pair of the different scattering directions. Then, coordinate axes are defined by the directions of difference vectors of pairs of wave vectors of the scattered light pointing in the different scattering directions. Finally, a projection of the velocity field of the fluid flow in the light-section on each coordinate axis is quantitatively determined from the corresponding spatial light intensity difference distribution divided by the modulus of the corresponding difference vector.

Remark: The modulus of a vector is its length. The modulus of an angle is its absolute value. The modulus is independent of the actual direction of the vector or angle. The plural of modulus is moduli.

Preferably, the moduli of two angles between the light section and each of the two different scattering directions of at least one pair of the different scattering directions, for which a spatial light intensity difference distribution is obtained, are equal. If even the moduli of two angles between the wave vector of the incident light and each of the two different scattering directions are equal, the projection of the velocity field on the coordinate axis associated with this pair of the different scattering directions is free of any influence of multi-particle scattering when determined according to the new method. The only other precondition for this is that the particles scatter same amounts of the incident light in the two different scattering directions. This is the case, for example, for most small particles and even for larger spherical particles with regard to the symmetric scattering directions considered here.

Most preferably, the normalized spatial light intensity distributions are obtained for four different scattering directions, the difference vectors of three pairs of the four different scattering directions running (a) parallel to the laser light illuminating the light section, (b) perpendicular to the laser light illuminating the light section but parallel to the light section, and (c) perpendicular to the laser light illuminating the light section and to the light section. Thus, the projections of the velocity field obtained according to the new invention belong to the coordinate axes of an orthogonal coordinate system in a most suitable orientation with regard to the light section.

The new method may be further improved in that, in the step of illuminating, the light sheet is illuminated out of the same direction with laser light of two different frequencies; in that, in the step of converting, a frequency to intensity converter having a transfer function, which is symmetric with regard to a mean frequency of the two different frequencies, is used for obtaining separate spatial light intensity distributions for both different frequencies; and in that, in the step of normalizing, the normalized spatial light intensity distributions are defined as the ratios of the differences of the separate spatial light intensity distributions for both different frequencies to the sums of the differences of the separate spatial light intensity distributions for both different frequencies of the laser light multiplied by half of the difference in frequency of the two different frequencies of the laser light. The result of these additional steps is a normalization of the spatial light intensity distributions in respect of the light intensity distribution of the scattered light without using an additional reference camera. Of course this way of normalizing the spatial light intensity distributions in respect of the light intensity distribution of the scattered light is advantageous at its own and can be used even without the other steps of the new method.

Ideally, the transfer function of the frequency to intensity converter has a Gaussian-like shape having a FWHM equal to the difference in frequency of the two different frequencies of the laser light. A Gaussian-like shape of the transfer function does not require that the transfer function is an exact Gaussian function. Generally, it will only resemble a Gaussian function. However, the slopes of the transfer function in the range of two different frequencies with which the light section is illuminated will be quite similar to the slopes of a Gaussian function at its half maximum.

The new device is characterized by an evaluation means carrying out the steps of the new method.

Preferably, the new device also comprises a frequency modulator for modulating the frequency of the laser light from the laser to illuminate the light sheet out of the same direction with laser light of two different frequencies, and a frequency to intensity converter having a transfer function, which is symmetric with regard to a mean frequency of the two different frequencies, for obtaining separate spatial light intensity distributions for both different frequencies. This enables the normalizing means to define the normalized spatial light intensity distributions as the ratios of the differences of the separate spatial light intensity distributions for both different frequencies to the sums of the differences of the separate spatial light intensity distributions for both different frequencies of the laser light multiplied by half of the difference in frequency of the two different frequencies of the laser light.

Further preferred embodiments of the new device correspond to preferred embodiments of the new method.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims.

**BRIEF DESCRIPTION OF THE DRAWINGS**

In the following, the invention is further explained and described with respect to preferred exemplary embodiments illustrated in the drawings.

**Fig. 1**   shows a vector scheme illustrating the elimination of a multi-particle scattering influence on the result of a velocity field measurement.

**Fig. 2**   illustrates an general optimum measuring configuration of light beams in the wave vector space for carrying out the new method.

**Fig. 3**   illustrates an optimum measuring configuration of light beams in the wave vector space for a velocity component normal to a light section.

**Fig. 4**   illustrates an optimum measuring configuration of light beams in the wave vector space for a velocity component parallel to the light section.

**Fig. 5**   shows a first example of a symmetrical transmitting function of a frequency-to-intensity converter.

**Fig. 6**   shows a second example of a symmetrical transmitting function of a frequency-to-intensity converter.

**Fig. 7**   shows a scheme of an implementation of an improved embodiment of the new method; and

**Fig. 8**   shows a complete optical Doppler system for measuring a field of velocity vectors according to a preferred embodiment of the present invention.

**DESCRIPTION OF THE DRAWINGS**

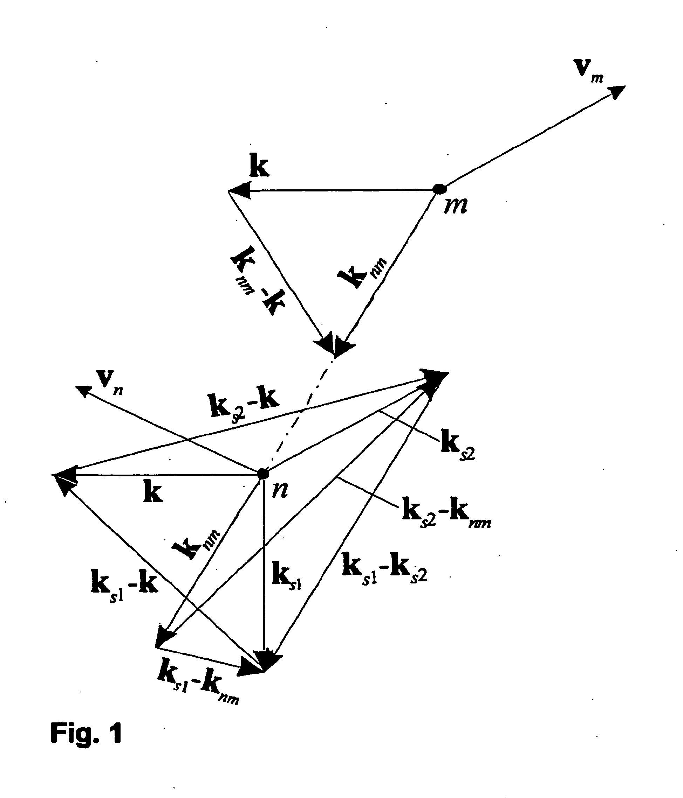

The vector scheme in **Fig. 1** shows a method of eliminating a multi-particle scattering influence on a result of a velocity field measurement.

A laser sheet is formed by an incident light field having a wave vector **k**. Let's consider the light field scattered by particle $n$ in the direction of wave vector $\mathbf{k}_{s1}$, taking into account the contribution of scattered light that is incident on particle $n$ from the next particle $m$.

The complex amplitude of the light field, scattered by particle $n$ in the direction of wave vector $\mathbf{k}_{s1}$ is the following:

$$\bar{E}_{n1} = A S_{n1} \exp\left\{ j \left[ (\omega_0 + \Omega)t + \mathbf{v}_n \left( \mathbf{k}_{s1} - \mathbf{k} \right) t + \varphi_n \right] \right\} +$$
$$+ \sum_m A S_{n1} S_m \exp\left\{ j \left[ (\omega_0 + \Omega)t + \mathbf{v}_m \left( \mathbf{k}_{nm} - \mathbf{k} \right) t + \right.\right. \tag{1}$$
$$\left.\left. + \mathbf{v}_n \left( \mathbf{k}_{s1} - \mathbf{k}_{nm} \right) t + \varphi_{nm} \right] \right\},$$

wherein $A$ - amplitude of incident light field with wave vector **k**; $S_{n1}$ - scattering function of particle $n$ ; $\mathbf{v}_n$ - velocity of

particle $n$ ; $\omega_0$ - laser light frequency; $\Omega$ - frequency shift, corresponding to the working point on the slope of the transmitting function of the frequency-to-intensity converter that serves as discrimination curve; $\varphi_n$ - light wave phase, determined by the position of particle $n$ in the light section; $\mathbf{v}_m$ - velocity of next particle $m$ ; $\mathbf{k}_{nm}$ - wave vector of light wave, scattered by particle $m$ in the direction of particle $n$ ; $\mathbf{v}_m(\mathbf{k}_{nm}-\mathbf{k})$ - Doppler frequency shift in light wave scattered by particle $m$ in the direction of particle $n$ ; $\mathbf{v}_n(\mathbf{k}_{s1} - \mathbf{k}_{nm})$ - Doppler frequency shift of the light wave with wave vector $\mathbf{k}_{s1}$, scattered by particle $n$ from the incident light field that has already been scattered by particle $m$.

The light field according to Eq. (1) that is scattered in the direction of $\mathbf{k}_{s1}$ is transformed by the frequency-to-intensity converter and registered by a camera. The equation for the image of particle $n$, formed in frequency-demodulated light, scattered in the direction of $\mathbf{k}_{s1}$, can be obtained from Eq. (1):

$$i_{n1} = A^2 S_{n1}^2 \left\{ \left[\Omega + \mathbf{v}_n(\mathbf{k}_{s1} - \mathbf{k})\right] + \sum_m S_m^2 \left[\Omega + \mathbf{v}_m(\mathbf{k}_{nm} - \mathbf{k}) + \mathbf{v}_n(\mathbf{k}_{s1} - \mathbf{k}_{nm})\right] \right\}. \quad (2)$$

Here, it is assumed that the intensity at the output of the converter is proportional to the frequency shift with regard to the working point. The term in the sum takes into account the contribution of multi-particle single scattering from the next particles $m$ and determines the error in DGV field measurements at the point determined by the position of particle $n$. This partial contribution to the measurement error contains the Doppler frequency shift in light, scattered by particle $m$ in the direction of particle $n$, proportional to the velocity projection $\mathbf{v}_m$ of particle $m$ on the difference wave vector $\mathbf{k}_{nm}$ - $\mathbf{k}$, $\mathbf{v}_m(\mathbf{k}_{nm} -\mathbf{k})$, and the Doppler frequency shift, proportional to the velocity projection $\mathbf{v}_n$ of particle $n$ on the difference wave vectors $\mathbf{k}_{s1}$ - $\mathbf{k}_{nm}$, $\mathbf{v}_n(\mathbf{k}_{s1} - \mathbf{k}_{nm})$. For exclusion of this contribution a second channel is introduced for registration of the particle image in frequency-demodulated light, scattered in direction of the wave vector $\mathbf{k}_{s2}$.

The Eq. (3) for the image of particle $n$ in the frequency-demodulated light, scattered in the direction of $\mathbf{k}_{s2}$, can be obtained similarly to the Eq. (2):

$$i_{n2} = A^2 S_{n2}^2 \left\{ \left[\Omega + \mathbf{v}_n(\mathbf{k}_{s2} - \mathbf{k})\right] + \sum_m S_m^2 \left[\Omega + \mathbf{v}_m(\mathbf{k}_{nm} - \mathbf{k}) + \mathbf{v}_n(\mathbf{k}_{s2} - \mathbf{k}_{nm})\right] \right\}. \quad (3)$$

where $S_{n2}$ is the scattering function of particle $n$ in the direction of $\mathbf{k}_{s2}$.

Let's subtract the image according to Eq. (3) from the image according to Eq. (2),

$$i_{n12} = i_{n1} - i_{n2} = A^2 \left\{ \left(1 + \sum_m S_m^2\right) \left[\left(S_{n1}^2 - S_{n2}^2\right)\Omega + S_{n1}^2 \mathbf{v}_n \mathbf{k}_{s1} - S_{n2}^2 \mathbf{v}_n \mathbf{k}_{s2}\right] \right\} +$$

$$+ A^2 \left(S_{n1}^2 - S_{n2}^2\right) \left\{ \sum_m S_m^2 \left[\left(\mathbf{v}_n - \mathbf{v}_m\right)\mathbf{k}_{nm} - \mathbf{v}_m \mathbf{k}\right] - \mathbf{v}_n \mathbf{k} \right\}. \quad (4)$$

In case of identical scattering coefficients $S_{n1}^2 = S_{n2}^2 = S_n^2$ in the directions of $\mathbf{k}_{s1}$ and $\mathbf{k}_{s2}$, we obtain the following:

$$i_{n12}\big|_{S_{n1}^2 = S_{n2}^2 = S_n^2} = A^2 S_n^2 \left(1 + \sum_m S_m^2\right) \mathbf{v}_n(\mathbf{k}_{s1} - \mathbf{k}_{s2}).$$

After normalization this result corresponds to:

$$\tilde{i}_{n12} = \frac{i_{n12}}{A^2 S_n^2 \left(1 + \sum_m S_m^2\right)} = \mathbf{v}_n(\mathbf{k}_{s1} - \mathbf{k}_{s2}). \qquad (5)$$

It can be seen from Eq. (5) that for $S_{n1}^2 = S_{n2}^2$ the contribution of multi-particle scattering is eliminated. The intensity of the resulting image is determined by the projection of the velocity vector of particle $n$ on the difference vector $\mathbf{k}_{s1}$ - $\mathbf{k}_{s2}$, which is providing the direction of a coordinate axis in a reference frame.

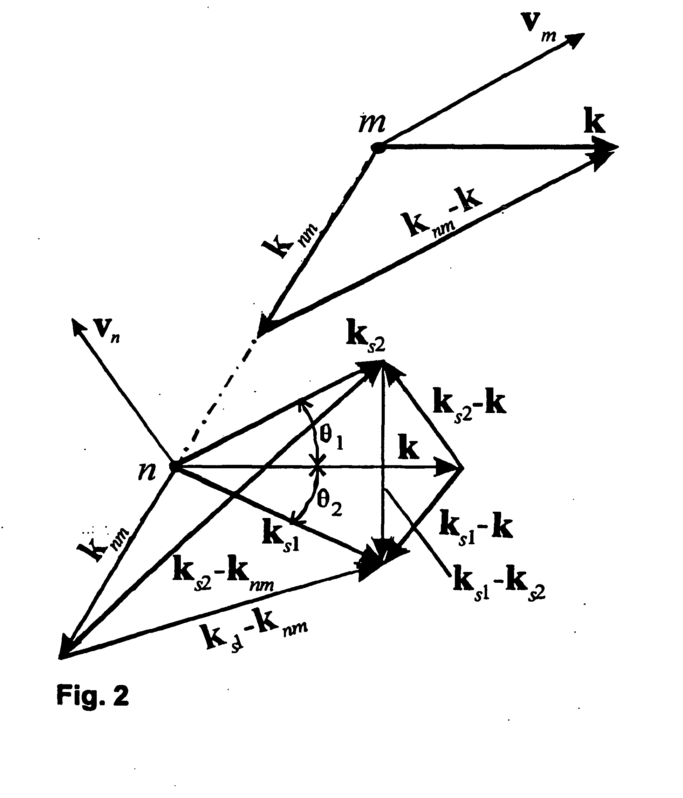

An optimum measuring configuration of light beams in the wave vector space satisfying the condition $S_{n1}^2 = S_{n2}^2 = S_n^2$ may have the form shown in **Fig. 2**. The condition $S_{n1}^2 = S_{n2}^2 = S_n^2$ is realized for spherical particles at equal angles between the direction of wave vector $\mathbf{k}$ and the directions of wave vectors $\mathbf{k}_{s1}$ and $\mathbf{k}_{s2}$ of the scattered light:

$$\theta_1 = -\theta_2 = \theta.$$

As it is evident from Eq. (2), $(\mathbf{k}_{s1}\text{-}\mathbf{k}_{nm})\text{-}(\mathbf{k}_{s2}\text{-}\mathbf{k}_{nm})=(\mathbf{k}_{s1}\text{-}\mathbf{k})\text{-}(\mathbf{k}_{s2}\text{-}\mathbf{k})=(\mathbf{k}_{s1}\text{-}\mathbf{k}_{s2})$, and the influence of multi-particle scattering on the result of velocity field measurements is excluded.

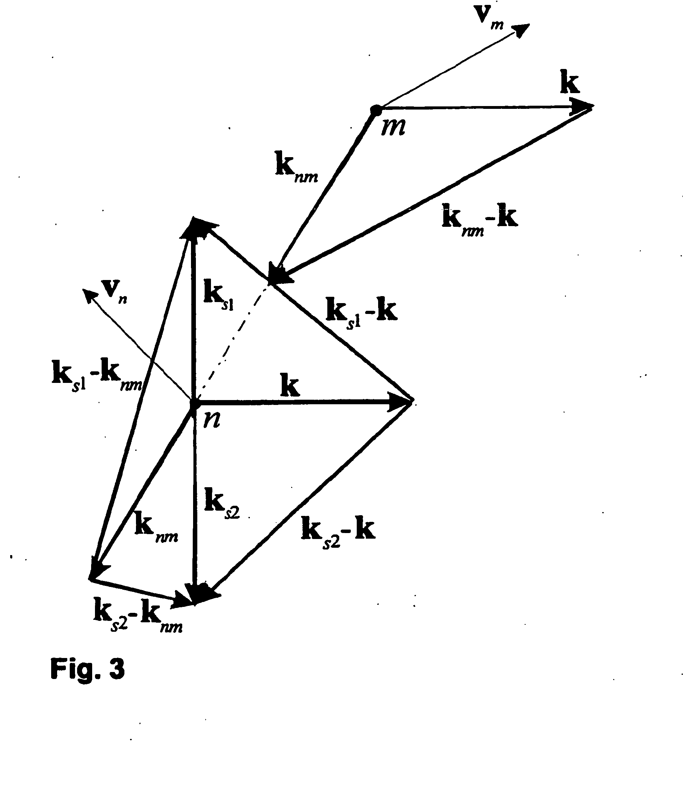

In the particular case of $\mathbf{k}_{s2}$ = -$\mathbf{k}_{s1}$ = $\mathbf{k}_s$ and thus $\theta_1$ = -$\theta_2$ = $\pi/2$ one can obtain the configuration of light beams in the wave vector space shown in **Fig. 3**. Since for spherical particles in this scattering geometry $S_{n1}^2 = S_{n2}^2 = S_n^2$, Eq. (4) takes the form:

$$i_{n12} = A^2 S_n^2 \left(1 + \sum_m S_m^2\right) 2\mathbf{v}_n \mathbf{k}_s.$$

After normalization this result corresponds to:

$$\tilde{i}_{n12} = \frac{i_{n12}}{A^2 S_{n1}^2 \left(1 + \sum_m S_m^2\right)} = 2\mathbf{v}_n \mathbf{k}_s. \qquad (6)$$

It follows from Eq. (6) that the intensity of the resulting normalized image of the particle $n$ in frequency-demodulated light is under these conditions only determined by the projection of the velocity vector of particle $n$ on the difference vector $\mathbf{k}_{s1}$ - $\mathbf{k}_{s2}$ = $2\mathbf{k}_s$, which determines the coordinate axis of the reference frame *normal* to the propagation direction of the light sheet.

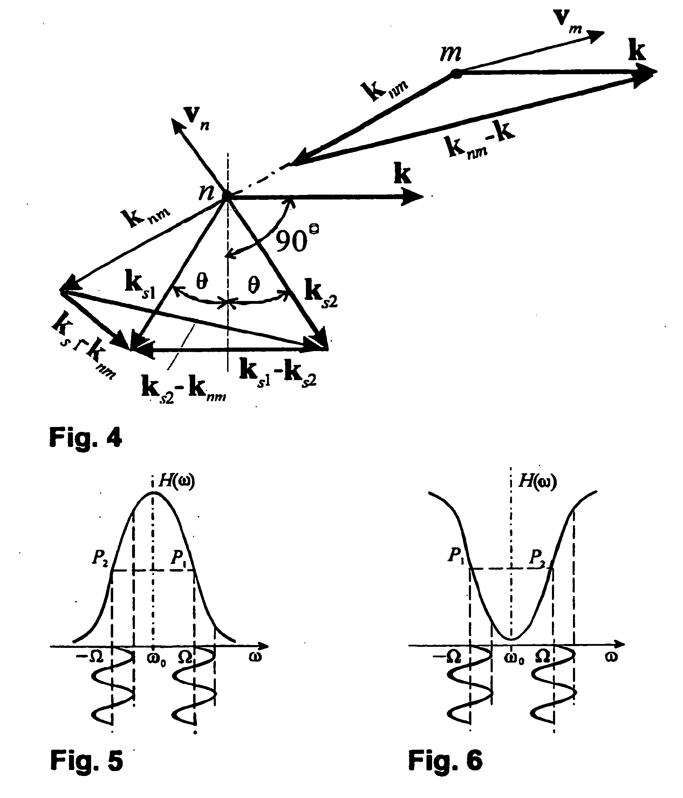

Let's consider the proposed method of investigation for the determination of the velocity component *parallel* to the laser sheet. Doing this requires that the difference of wave vectors of scattered beams forming the frequency-demodulated image of particle $n$ is parallel to the wave vector of the laser sheet. The corresponding configuration of beams in wave vector space is shown in **Fig. 4**. Under conditions of Rayleigh scattering in this geometry $S_{n1}^2 = S_{n2}^2 = S_n^2$, and the expression describing the converted normalized image of particle $n$ coincides with Eq. (5).

The reference image for the normalization of the output images from the converter can be formed using a separate camera as in common DGV systems, or by using the improved embodiment of the present invention.

Let's estimate the reference signal using a separate camera. The reference image of particle $n$ in light scattered in the direction of wave vector $\mathbf{k}_{s1}$ can be deduced from Eq. (1):

$$I_{n1} = \left|\hat{E}_{n1}\right|^2 = A^2 S_{n1}^2 \left|\exp\left\{j\left[(\omega_0 + \Omega)t + \mathbf{v}_n(\mathbf{k}_{s1} - \mathbf{k})t + \varphi_n\right]\right\} + \right.$$

$$\left. + \sum_m S_m \exp\left\{j\left[(\omega_0 + \Omega)t + \mathbf{v}_m(\mathbf{k}_{nm} - \mathbf{k})t + \mathbf{v}_n(\mathbf{k}_{s1} - \mathbf{k}_{nm}) + \varphi_{nm}\right]\right\}\right|^2 =$$

$$= A^2 S_{n1}^2 \left(1 + \sum_m S_m^2\right) + 2A^2 S_{n1}^2 \sum_m S_m \cos\left\{\mathbf{v}_n(\mathbf{k}_{s1} - \mathbf{k})t - \mathbf{v}_m(\mathbf{k}_{nm} - \mathbf{k})t - \right.$$

$$\left. - \mathbf{v}_n(\mathbf{k}_{s1} - \mathbf{k}_{nm})t + \varphi_n - \varphi_{nm}\right\} + 2A^2 S_{n1}^2 \sum_{m,q} S_m S_q \cos\left\{\left[\mathbf{v}_m(\mathbf{k}_{nm} - \mathbf{k}) + \mathbf{v}_n(\mathbf{k}_{s1} - \mathbf{k}_{nm}) - \right.\right.$$

$$\left.\left. - \mathbf{v}_q(\mathbf{k}_{nq} - \mathbf{k}) - \mathbf{v}_n(\mathbf{k}_{s1} - \mathbf{k}_{nq})\right]t + \varphi_{nm} - \varphi_{nq}\right\} = A^2 S_{n1}^2 \left(1 + \sum_m S_m^2\right) +$$

$$+ 2A^2 S_{n1}^2 \sum_m S_m \cos\left\{\left[\mathbf{v}_{nm}\mathbf{k}_{nm} - \mathbf{v}_{nm}\mathbf{k}\right]t + \varphi_n - \varphi_{nm}\right\} +$$

$$+ 2A^2 S_{n1}^2 \sum_{m,q} S_m S_q \cos\left\{\left[\mathbf{v}_{mn}\mathbf{k}_{nm} + \mathbf{v}_{qn}\mathbf{k} + \mathbf{v}_{nq}\mathbf{k}_{nq}\right]t + \varphi_{nm} - \varphi_{nq}\right\} =$$

$$= A^2 S_{n1}^2 \left(1 + \sum_m S_m^2\right) + 2A^2 S_{n1}^2 \sum_m S_m \cos\left\{\mathbf{v}_{nm}(\mathbf{k}_{nm} - \mathbf{k})t + \varphi_n - \varphi_{nm}\right\} +$$

$$+ 2A^2 S_{n1}^2 \sum_{m,q} S_m S_q \cos\left\{\left[\mathbf{v}_{mn}\mathbf{k}_{nm} + \mathbf{v}_{qn}\mathbf{k} + \mathbf{v}_{nq}\mathbf{k}_{nq}\right]t + \varphi_{nm} - \varphi_{nq}\right\}$$

wherein $\mathbf{v}_{mn} = \mathbf{v}_m - \mathbf{v}_n$; $\mathbf{v}_{qm} = \mathbf{v}_q - \mathbf{v}_m$; $\mathbf{v}_{nq} = \mathbf{v}_n - \mathbf{v}_q$; $\mathbf{k}_{nq} = \mathbf{k}_n - \mathbf{k}_q$. By time averaging we obtain the following Eq. (7):

$$\langle I_{n1}\rangle = \left\langle A^2 S_{n1}^2 \left(1 + \sum_m S_m^2\right)\right\rangle + \left\langle 2A^2 S_{n1}^2 \sum_m \cos\left\{\mathbf{v}_n(\mathbf{k}_{nm} - \mathbf{k})t + \varphi_n\right\}\right\rangle +$$

$$+ \left\langle 2A^2 S_{n1}^2 \sum_{m,q} S_m S_q \cos\left\{\left[\mathbf{v}_{nm}\mathbf{k}_{nm} + \mathbf{v}_{qm}\mathbf{k} + \mathbf{v}_n\mathbf{k}_q\right]t + \varphi_{nm} - \varphi_{nq}\right\}\right\rangle = A^2 S_{n1}^2 \left(1 + \sum_m S_m^2\right)$$

$$(7)$$

Correspondingly, we obtain the following Eq. (8) for the second reference image:

$$\langle I_{n2}\rangle = A^2 S_{n2}^2 \left(1 + \sum_m S_m^2\right). \tag{8}$$

Let's now consider the method of forming the normalized image in frequency-demodulated scattered light using one camera only. This method corresponds to the preferred embodiment of the present invention which makes use of a frequency-to-intensity converter having a symmetrical transmitting function, examples of which being shown in **Fig. 5** and **Fig. 6.** Let's choose working points $P_1$ and $P_2$ symmetrically arranged (with regard to a central frequency) in linear sections of the transmitting function as discrimination curves. Let the laser sheet be formed by two spatially matched laser beams sequentially succeeding in time, the frequencies of which differ by a known value $2\Omega$. In this case two images of the particle $n$ in scattered light are subsequently registered by a camera synchronized with the sequence of the incident laser beams. In turn, either the right or the left slope (vicinity of working points $P_1$ or $P_2$) of the linear sections of the transmitting function of the frequency-to-intensity converter are used. Let's write the expressions for the complex amplitudes of the beams scattered by particle $n$, the frequencies of which correspond to either the left or the right slope:

$$\hat{E}_{n1}(\Omega, k_{s1}) = AS_{n1}\exp\{j[(\omega_0 + \Omega + v_n(k_{s1} - k))t + \varphi_n]\} + \\ + AS_{n1}\sum_m S_m \exp\{j[(\omega_0 + \Omega + v_m(k_{nm} - k) + v_n(k_{s1} - k_{nm}))t + \varphi_{nm}]\}; \tag{9}$$

$$\hat{E}_{n2}(-\Omega, k_{s1}) = AS_{n1}\exp\{j[(\omega_0 - \Omega + v_n(k_{s1} - k))(t + \tau) + \varphi_n]\} + \\ + AS_{n1}\sum_m S_m \exp\{j[(\omega_0 - \Omega + v_m(k_{nm} - k) + v_n(k_{s1} - k_{nm}))(t + \tau) + \varphi_{nm}]\}. \tag{10}$$

Here $\tau$ is the given period of the sequence of the light beams forming the light section.

After optical frequency-demodulation and frequency-to-intensity conversion one can obtain the following signals at the output of the registrating camera sequentially in time:

$$i_{n1}(\Omega, \mathbf{k}_{s1}) = A^2 S_{n1}^2 [\Omega + v_n(\mathbf{k}_{s1} - \mathbf{k})] + \\ + A^2 S_{n1}^2 \sum_m S_m^2 [\Omega + v_m(\mathbf{k}_{nm} - \mathbf{k}) + v_n(\mathbf{k}_{s1} - \mathbf{k}_{nm})] \tag{11}$$

$$i_{n2}(-\Omega, \mathbf{k}_{s1}) = A^2 S_{n1}^2 [\Omega - v_n(\mathbf{k}_{s1} - \mathbf{k})] + \\ + A^2 S_{n1}^2 \sum_m S_m^2 [\Omega - v_m(\mathbf{k}_{nm} - \mathbf{k}) - v_n(\mathbf{k}_{s1} - \mathbf{k}_{nm})]. \tag{12}$$

These expressions are stored and are subjected to simple linear transformations. By subtracting the second expression from the first we obtain:

$$i_{n12} = i_{n1}(\Omega, \mathbf{k}_{s1}) - i_{n1}(-\Omega, \mathbf{k}_{s1}) = \\ = 2A^2 S_{n1}^2 \left\{ v_n(\mathbf{k}_{s1} - \mathbf{k}) + \sum_m S_m^2 [v_m(\mathbf{k}_{nm} - \mathbf{k}) + v_n(\mathbf{k}_{s1} - \mathbf{k}_{nm})] \right\}. \tag{13}$$

Adding the images according to Eq. (11) and Eq. (12) gives:

$$i_{n1}(\Omega, \mathbf{k}_{s1}) + i_{n2}(-\Omega, \mathbf{k}_{s1}) = 2A^2 S_{n1}^2 \left(1 + \sum_m S_m^2\right)\Omega \tag{14}$$

This sum image can function as reference. After normalizing the signal image according to Eq. (13) with the reference according to Eq. (14), we obtain:

$$\tilde{i}_{n1}(\mathbf{k}_{s1}) = \frac{i_{n1}(\Omega, \mathbf{k}_{s1}) - i_{n1}(-\Omega, \mathbf{k}_{s1})}{i_{n1}(\Omega, \mathbf{k}_{s1}) + i_{n1}(-\Omega, \mathbf{k}_{s1})} =$$

$$= \frac{2A^2 S_{n1}^2 \left\{ \mathbf{v}_n(\mathbf{k}_{s1} - \mathbf{k}) + \sum_m S_m^2 \left[ \mathbf{v}_m(\mathbf{k}_m - \mathbf{k}) + \dot{\mathbf{v}}_n(\mathbf{k}_{s1} - \mathbf{k}_{nm}) \right] \right\}}{2\Omega A^2 S_{n1}^2 \left( 1 + \sum_m S_m^2 \right)} = \quad (15)$$

$$= \frac{\mathbf{v}_n(\mathbf{k}_{s1} - \mathbf{k}) + \sum_m S_m^2 \left[ \mathbf{v}_m(\mathbf{k}_m - \mathbf{k}) + \mathbf{v}_n(\mathbf{k}_{s1} - \mathbf{k}_{nm}) \right]}{\Omega \left( 1 + \sum_m S_m^2 \right)} .$$

Thus, using a frequency-to-intensity converter having a symmetrical transmitting function and one registering camera only, one can obtain the normalized frequency-demodulated image of the laser sheet that is formed in scattered light in the scattering direction of wave vector $\mathbf{k}_{s1}$ according to Eq. (15). Using an analogous technique we obtain the normalized frequency-demodulated image of the laser sheet in scattered light in the scattering direction of wave vector $\mathbf{k}_{s2}$ :

$$\tilde{i}_{n2}(\mathbf{k}_{s2}) = \frac{i_{n2}(\Omega, \mathbf{k}_{s2}) - i_{n2}(-\Omega, \mathbf{k}_{s2})}{i_{n2}(\Omega, \mathbf{k}_{s1}) + i_{n2}(-\Omega, \mathbf{k}_{s1})} =$$

$$= \frac{\mathbf{v}_n(\mathbf{k}_{s2} - \mathbf{k}) + \sum_m S_m^2 \left[ \mathbf{v}_m(\mathbf{k}_m - \mathbf{k}) + \mathbf{v}_n(\mathbf{k}_{s2} - \mathbf{k}_{nm}) \right]}{\Omega \left( 1 + \sum_m S_m^2 \right)} . \quad (16)$$

Then, the difference of the frequency-demodulated normalized images according to Eq. (15) and Eq. (16) can be calculated:

$$\tilde{i}_{n1}(\mathbf{k}_{s1}) - \tilde{i}_{n2}(\mathbf{k}_{s2}) = \frac{\mathbf{v}_n(\mathbf{k}_{s1} - \mathbf{k}_{s2}) + \sum_m S_m^2 \mathbf{v}_n(\mathbf{k}_{s1} - \mathbf{k}_{s2})}{\Omega \left( 1 + \sum_m S_m^2 \right)} =$$

$$= \frac{\left( 1 + \sum_m S_m^2 \right) \mathbf{v}_n(\mathbf{k}_{s1} - \mathbf{k}_{s2})}{\Omega \left( 1 + \sum_m S_m^2 \right)} = \frac{1}{\Omega} \mathbf{v}_n(\mathbf{k}_{s1} - \mathbf{k}_{s2}). \quad (17)$$

Multiplying Eq. (17) with the known value of $\Omega$, we obtain

$$\left[\bar{\bar{i}}_{n1}(\mathbf{k}_{s1}) - \bar{\bar{i}}_{n2}(\mathbf{k}_{s2})\right]\Omega = \mathbf{v}_n(\mathbf{k}_{s1} - \mathbf{k}_{s2}). \qquad (18)$$

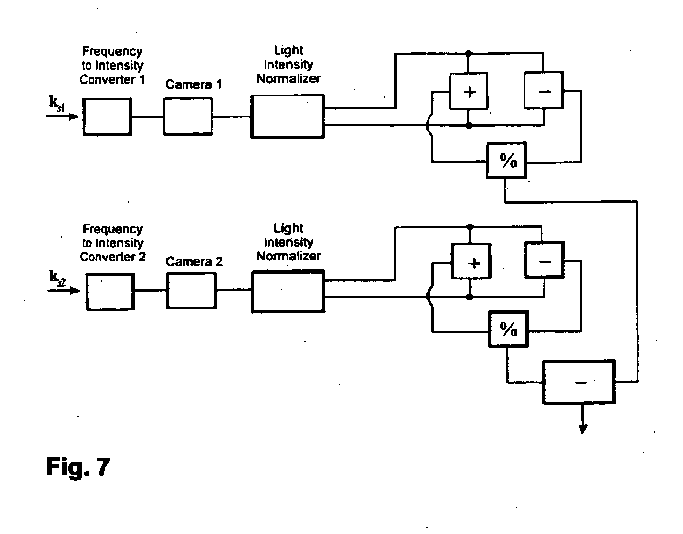

The algorithm described here is realized in the scheme shown in **Fig. 7.**

As seen from Eq. (17) and Eq. (18), the proposed method for velocity field measurement allows for excluding the influence of multi-particle scattering under random scattering of the particles in the directions of the wave vectors $\mathbf{k}_{s1}$ and $\mathbf{k}_{s2}$. For example, measurements can be made in the light beam configurations in the wave vector space shown in Figs. 1 to 4, without any limitation on size, shape and optical properties of particles. It should be noted that the mass of the particles is chosen to match the dynamics of the particle motion to the dynamics of the investigated flow.

Further, it follows from Eq. (18) that the proposed method ensures a linear dynamic measurement range and allows for an expansion of the dynamic range by a proper selection of $\Omega$. The frequency shift of the laser beams alternately forming the laser sheets is chosen equal to half the frequency interval between the working points in linear sections of the symmetrical transmitting function. The required subtraction and summation of frequency-demodulated images is realized in a computer.

The proposed invention allows for real-time inspection and automatic adjusting the transmitting function of the optical Doppler processor to the frequency of the laser radiation forming the laser sheet.

Let's refer again to Fig. 5 and Fig. 6. Assume that $\pm\xi$ is the slope of the frequency curve in working points $P_1$ and $P_2$. Then the light intensity at the output of the optical frequency processor caused by the input of the frequency-modulated alternating light field can be described by the following equation:

$$I = I_0 + \xi\,\mathrm{sgn}(\sin\widetilde{\omega}t)\left[\omega - \omega_0 + \Omega\,\mathrm{sgn}(\sin\widetilde{\omega}t)\right], \qquad (19)$$

wherein $I_0$ - intensity of the alternating field in working points $P_1$ and $P_2$, corresponding to frequencies $\omega_1 = \omega_0 + \Omega$ and $\omega_2 = \omega_0 - \Omega$; $\widetilde{\omega}$ - frequency of field alternation;

$$\mathrm{sgn}(\sin\widetilde{\omega}t) \quad - \quad \text{signum function (signature):} \quad \mathrm{sgn}(\sin\widetilde{\omega}t) = \begin{cases} 1, & \sin\widetilde{\omega}t > 0; \\ -1, & \sin\widetilde{\omega}t < 0. \end{cases}$$

Here, this expression resembles a rectangular-wave function that alternates between a value of +1 during illumination with one of the successive laser beams and a value of -1 for the other.

From Eq. (18) it follows, that for

$$\omega - \omega_0 + \Omega\,\mathrm{sgn}(\sin\widetilde{\omega}t) = 0 \qquad (20)$$

the signal at the output of the optical Doppler processor is constant, i.e., $I = I_0$. For proper operation the laser frequency and the center frequency $\omega_0$ of the transmitting function of the optical processor are adjusted in such a way that they are equal. If the laser frequency shifts by a value $\Delta\omega$ relative to the center frequency then - based on Eq. (20) - Eq. (19) takes the form of:

$$I = I_0 + \xi\,\mathrm{sgn}(\sin\widetilde{\omega}t)\left[\omega + \Delta\omega - \omega_0 + \Omega\,\mathrm{sgn}(\sin\widetilde{\omega}t)\right] = I_0 + \Delta\omega\,\xi\,\mathrm{sgn}(\sin\widetilde{\omega}t). \qquad (21)$$

It follows from Eq. (21), that under the imbalance of frequencies a signal arises at the output of the optical processor oscillating at the frequency of the alternating light field, with an amplitude proportional to the frequency imbalance $\Delta\omega$, and with a phase corresponding to the sign of the frequency imbalance. This signal at frequency $\widetilde{\omega}$ can be used as an error signal to form a control signal for a system of automatically matching the frequencies.

The slope of the discrimination characteristic $\xi$ is determined by the amplitude of the control signal $\widetilde{I}(\Delta\omega) = \Delta\omega\xi$

at the given frequency imbalance $\xi = \dfrac{\widetilde{I}(\Delta\omega)}{\Delta\omega}$. By scanning $\Delta\omega$ it is possible to monitor a full contour of the transfer function of the processor.

In a system that measures the velocity field in one projection direction, it is easy to carry out the tuning of the frequencies of the laser beams forming the light section and of the optical processor used for frequency to intensity conversion. To this end, one of the laser resonator mirrors may be mounted on a piezoceramic actuator operated by the control signal.

In a system measuring the vectors of the velocity field, an automatic tuning of the resonance frequency of the transmitting function is carried out for each processor with regard to the laser beam frequencies. A stationary scattering reference point located in the laser sheet or light section serves as a light source for frequency auto tuning for each optical processor. The light signal for the automatic tuning process may also be directly transmitted from the laser to the optical processor through, for example, an optical fiber.

The control signal operates a piezoelectric actuator carrying one of the mirrors of the optical resonator in the Doppler processor.

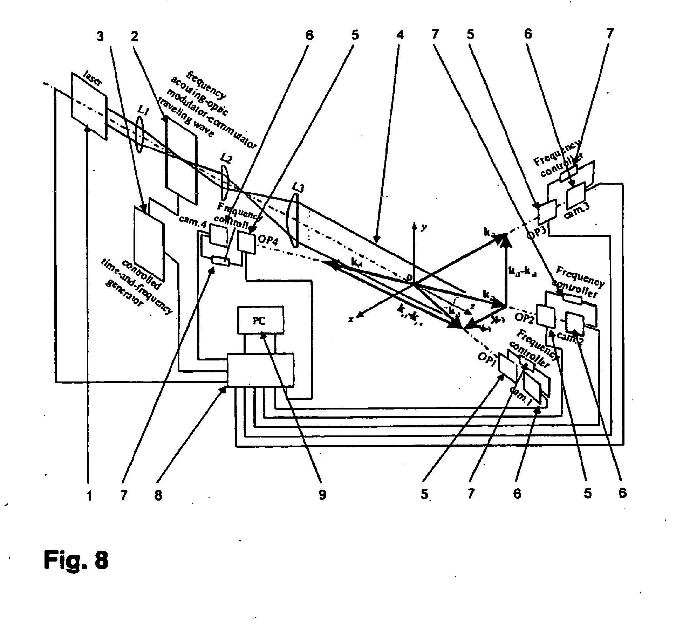

A complete optical Doppler system for measuring a field of velocity vectors with exclusion of the influence of multi-particle scattering on the measurement result as well as with real-time control of the frequency transmitting functions of the optical processors is shown in **Fig. 8.**

**List of Reference Numerals:**

1 - Laser
2 - Frequency Modulator
3 - Frequency Modulation and Frequency Alternation Controller
4 - Light Section
5 - Intensity to Frequency Converter
6 - Camera
7 - Frequency Controller
8 - Interface
9 - Computer

**Claims**

**1.** A laser Doppler method for measuring a velocity field of a fluid flow, comprising the steps of:

- illuminating a light-section extending through the fluid flow with laser light;
- converting spatial distributions of Doppler frequency shifts of scattered light, which is scattered by particles carried by the fluid flow out of the light-section in different scattering directions, into a spatial light intensity distribution for each scattering direction; and
- normalizing the spatial light intensity distributions in respect of a light intensity distribution of the scattered light;

**characterized by**:

- subtracting the normalized spatial light intensity distributions obtained for the different scattering directions in pairs to obtain a spatial light intensity difference distribution for each pair of the different scattering directions;
- defining coordinate axes by the directions of difference vectors of pairs of wave vectors of the scattered light pointing in the different scattering directions; and
- quantitatively determining a projection of the velocity field of the fluid flow in the light-section on each coordinate axis from the corresponding spatial light intensity difference distribution divided by the modulus of the corresponding difference vector.

**2.** The method of claim 1, **characterized in that** the moduli of two angles between the light section and each of the two different scattering directions of at least one pair of the different scattering directions, for which a spatial light intensity difference distribution is obtained, are equal.

3. The method of claim 1 or 2, **characterized in that** normalized spatial light intensity distributions are obtained for four different scattering directions, the difference vectors of three pairs of the four different scattering directions running (a) parallel to the laser light illuminating the light section, (b) perpendicular to the laser light illuminating the light section but parallel to the light section, and (c) perpendicular to the laser light illuminating the light section and to the light section.

4. The method of any of the claims 1 to 3, **characterized in**

   - **that**, in the step of illuminating, the light sheet is illuminated out of the same direction with laser light of two different frequencies;
   - **that**, in the step of converting, a frequency to intensity converter having a transfer function, which is symmetric with regard to a mean frequency of the two different frequencies, is used for obtaining separate spatial light intensity distributions for both different frequencies: and
   - **that**, in the step of normalizing, the normalized spatial light intensity distributions are defined as the ratios of the differences of the separate spatial light intensity distributions for both different frequencies to the sums of the differences of the separate spatial light intensity distributions for both different frequencies of the laser light multiplied by half of the difference in frequency of the two different frequencies of the laser light.

5. The method of claim 4, **characterized in that** the transfer function of the frequency to intensity converter has a Gaussian-like shape having a FWHM equal to the difference in frequency of the two different frequencies of the laser light.

6. A laser Doppler device for measuring a velocity field of a fluid flow, according to the method of any of the claims 1 to 5 comprising:

   - a laser for illuminating a light-section extending through the fluid flow with laser light;
   - a frequency to intensity converter for converting spatial distributions of Doppler frequency shifts of scattered light, which is scattered by particles carried by the fluid flow out of the light-section in different scattering directions, into a spatial light intensity distribution for each scattering direction;
   - a camera for each scattering direction for detecting the spatial light intensity distribution; and
   - a normalizing means for normalizing the spatial light intensity distributions in respect of a light intensity distribution of the scattered light;

   **characterized by** an evaluation means adapted to

   - subtract the normalized spatial light intensity distributions obtained for the different scattering directions in pairs to obtain a spatial light intensity difference distribution for each pair of the different scattering directions;
   - define coordinate axes by the directions of difference vectors of pairs of wave vectors of the scattered light pointing in the different scattering directions; and
   - quantitatively determine a projection of the velocity field of the fluid flow in the light-section on each coordinate axis from the corresponding spatial light intensity difference distribution divided by the modulus of the corresponding difference vector.

7. The device of claim 6, **characterized in that** the moduli of two angles between the light section and each of the two different scattering directions of at least one pair of the different scattering directions, for which a spatial light intensity difference distribution is obtained, are equal.

8. The device of claim 6 or 7, **characterized in that** frequency to intensity converters and cameras are provided in four different scattering directions, the difference vectors of three pairs of the four different scattering directions running (a) parallel to the laser light illuminating the light section, (b) perpendicular to the laser light illuminating the light section but parallel to the light section, and (c) perpendicular to the laser light illuminating the light section and to the light section.

9. The device of any of the claims 6 to 8, **characterized in**

   - **that** a frequency modulator is provided for modulating the frequency of the laser light from the laser to illuminate the light sheet out of the same direction with laser fight of two different frequencies;
   - **that** the frequency to intensity converter has a transfer function, which is symmetric with regard to a mean frequency of the two different frequencies, and is used for obtaining separate spatial light intensity distributions for both different frequencies; and
- **that** the normalizing means define the normalized spatial light intensity distributions as the ratios of the differences of the separate spatial light intensity distributions for both different frequencies to the sums of the differences of the separate spatial light intensity distributions for both different frequencies of the laser light multiplied by half of the difference in frequency of the two different frequencies of the laser light.

**10.** The device of claim 9, **characterized in that** the transfer function of the frequency to intensity converter has a Gaussian-like shape having a FWHM equal to the difference in frequency of the two different frequencies of the laser light.

**Patentansprüche**

**1.** Laser-Doppler-Verfahren zum Messen eines Geschwindigkeitsfelds einer Fluidströmung mit den Schritten:

- Ausleuchten eines Lichtschnitts, der sich durch die Fluidströmung erstreckt, mit Laserlicht;
- Umwandeln von räumlichen Verteilungen von Doppler-Frequenzverschiebungen von gestreutem Licht, das von mit der Fluidströmung geführten Teilchen aus dem Lichtschnitt in unterschiedliche Streurichtungen gestreut wird, in eine räumliche Lichtintensitätsverteilung für jede Streurichtung; und
- Normalisieren der räumlichen Lichtintensitätsverteilungen hinsichtlich einer Lichtintensitätsverteilung des Streulichts;

**gekennzeichnet durch**:

- paarweises Subtrahieren der normalisierten räumlichen Lichtintensitätsverteilungen, die für die unterschiedlichen Streurichtungen erhalten wurden, um eine räumliche Lichtintensitätsdifferenzverteilung für jedes Paar der unterschiedlichen Streurichtungen zu erhalten;
- Definieren von Koordinatenachsen **durch** die Richtungen der Differenzvektoren der Paare von Wellenvektoren des Streulichts, die in die unterschiedlichen Streurichtungen zeigen; und
- quantitativ Bestimmen einer Projektion des Geschwindigkeitsfelds der Fluidströmung in dem Lichtschnitt auf jede Koordinatenachse aus der entsprechenden räumlichen Lichtintensitätsdifferenzverteilung geteilt **durch** den Modulus des entsprechenden Differenzvektors.

**2.** Verfahren nach Anspruch 1, **dadurch gekennzeichnet, dass** die Moduli von zwei Winkeln zwischen dem Lichtschnitt und jeder der zwei unterschiedlichen Streurichtungen mindestens eines Paars der unterschiedlichen Streurichtungen, für die eine räumliche Lichtintensitätsdifferenzverteilung erhalten wird, gleich sind.

**3.** Verfahren nach Anspruch 1 oder 2, **dadurch gekennzeichnet, dass** normalisierte räumliche Lichtintensitätsverteilungen für vier unterschiedliche Streurichtungen erhalten werden, wobei die Differenzvektoren von drei Paaren der vier unterschiedlichen Streurichtungen (a) parallel zu dem Laserlicht, das den Lichtschnitt ausleuchtet, (b) senkrecht zu dem Laserlicht, das dem Lichtschnitt ausleuchtet, aber parallel zu dem Lichtschnitt und (c) senkrecht zu dem Laserlicht, das den Lichtschnitt ausleuchtet und zu dem Lichtschnitt verläuft.

**4.** Verfahren nach einem der Ansprüche 1 bis 3, **dadurch gekennzeichnet,**

- **dass** in dem Schritt des Ausleuchtens der Lichtschnitt aus derselben Richtung mit Laserlicht von zwei unterschiedlichen Frequenzen beleuchtet wird;
- **dass** in dem Schritt des Umwandelns ein Frequenz-in-Intensitäts-Wandler mit einer Transferfunktion, die symmetrisch bezüglich einer mittleren Frequenz der zwei unterschiedlichen Frequenzen ist, verwendet wird, um separate räumliche Lichtintensitätsverteilungen für beide unterschiedlichen Frequenzen zu erhalten; und
- **dass** in dem Schritt des Normalisierens die normalisierten räumlichen Lichtintensitätsverteilungen als die Verhältnisse der Differenzen der separaten räumlichen Lichtintensitätsverteilungen für beide unterschiedlichen Frequenzen zu den Summen der Differenzen der separaten räumlichen Lichtintensitätsverteilungen für beide unterschiedlichen Frequenzen des Laserlichts multipliziert mit der Hälfte der Differenz in der Frequenz der beiden unterschiedlichen Frequenzen des Laserlichts definiert werden.

**5.** Verfahren nach Anspruch 4, **dadurch gekennzeichnet, dass** die Transferfunktion des Frequenz-in-Intensitäts-Wandlers eine Gauss-artige Form mit einer Halbwertbreite gleich der Differenz in der Frequenz der beiden unterschiedlichen Frequenzen des Laserlichts aufweist.

**6.** Laser-Doppler-Vorrichtung zum Messen eines Geschwindigkeitsfelds einer Fluidströmung nach dem Verfahren nach einem der Ansprüche 1 bis 5, mit:

- einem Laser zum Ausleuchten eines Lichtschnitts, der sich durch die Fluidströmung erstreckt, mit Laserlicht;
- einem Frequenz-in-Intensitäts-Wandler zum Umwandeln von räumlichen Verteilungen von Doppler-Frequenzverschiebungen von gestreutem Licht, das von von der Fluidströmung mitgeführten Teilchen aus dem Lichtschnitt in unterschiedliche Streurichtungen gestreut wird, in eine räumliche Lichtintensitätsverteilung für jede Streurichtung;
- einer Kamera für jede Streurichtung zum Detektieren der räumlichen Lichtintensitätsverteilung; und
- einem Normalisierungsmittel zum Normalisieren der räumlichen Lichtintensitätsverteilung bezüglich einer Lichtintensitätsverteilung des Streulichts;

**gekennzeichnet durch** ein Auswertemittel, das vorgesehen ist, um

- die normalisierten räumlichen Lichtintensitätsverteilungen, die für die unterschiedlichen Streurichtungen erhalten werden, in Paaren zu subtrahieren, um eine räumliche Lichtintensitätsdifferenzverteilung für jedes Paar der unterschiedlichen Streurichtungen zu erhalten;
- Koordinatenachsen **durch** die Richtungen von Differenzvektoren von Paaren von Wellenvektoren des Streulichts, die in die unterschiedlichen Streurichtungen zeigen, zu definieren; und
- eine Projektion des Geschwindigkeitsfelds der Fluidströmung in dem Lichtschnitt auf jede Koordinatenachse aus der entsprechenden räumlichen Lichtintensitätsdifferenzverteilung geteilt **durch** den Modulus des entsprechenden Differenzvektors quantitativ zu bestimmen.

**7.** Vorrichtung nach Anspruch 6, **dadurch gekennzeichnet, dass** die Moduli von zwei Winkeln zwischen dem Lichtschnitt und jeder der zwei unterschiedlichen Streurichtungen von mindestens einem Paar der unterschiedlichen Streurichtungen, für die eine räumliche Lichtintensitätsdifferenzverteilung erhalten wird, gleich sind.

**8.** Vorrichtung nach Anspruch 6 oder 7, **dadurch gekennzeichnet, dass** Frequenz-in-Intensitäts-Wandler und Kameras in vier unterschiedlichen Streurichtungen vorgesehen sind, wobei die Differenzvektoren der drei Paare der vier unterschiedlichen Streurichtungen (a) parallel zu dem Laserlicht, das den Lichtschnitt beleuchtet, (b) senkrecht zu dem Laserlicht, das den Lichtschnitt beleuchtet, aber parallel zu dem Lichtschnitt und (c) senkrecht zu dem Laserlicht, das den Lichtschnitt beleuchtet, und zu dem Lichtschnitt verlaufen.

**9.** Vorrichtung nach einem der Ansprüche 6 bis 8, **dadurch gekennzeichnet,**

- **dass** ein Frequenzmodulator zum Modulieren der Frequenz des Laserlichts von dem Laser vorgesehen ist, um den Lichtschnitt aus derselben Richtung mit Laserlicht von zwei unterschiedlichen Frequenzen zu beleuchten;
- **dass** der Frequenz-in-Intensitäts-Wandler mit einer Transferfunktion, die symmetrisch bezüglich einer mittleren Frequenz der zwei unterschiedlichen Frequenzen ist, verwendet wird, um separate räumliche Lichtintensitätsverteilungen für beide unterschiedlichen Frequenzen zu erhalten; und
- **dass** das Normalisierungsmittel die normalisierten räumlichen Lichtintensitätsverteilungen als die Verhältnisse der Differenzen der separaten räumlichen Lichtintensitätsverteilungen für beide unterschiedlichen Frequenzen zu den Summen der Differenzen der separaten räumlichen Lichtintensitätsverteilungen für beide unterschiedlichen Frequenzen des Laserlichts multipliziert mit der Differenz in der Frequenz der beiden unterschiedlichen Frequenzen des Laserlichts definiert.

**10.** Vorrichtung nach Anspruch 9, **dadurch gekennzeichnet, dass** die Transferfunktion des Frequenz-in-Intensitäts-Wandlers eine Gauss-artige Form mit einer Halbwertsbreite gleich der Differenz in der Frequenz der beiden unterschiedlichen Frequenzen des Laserlichts aufweist.

**Revendications**

**1.** Procédé Doppler à laser pour mesurer un champ des vitesses d'un écoulement de fluide, comprenant les étapes consistant à :

- éclairer une section de lumière s'étendant à travers l'écoulement de fluide avec une lumière laser ;
- convertir les distributions spatiales des décalages de fréquence Doppler de la lumière diffusée, qui est diffusée par les particules transportées par l'écoulement de fluide en-dehors de la section de lumière dans différentes directions de diffusion, en une distribution d'intensité de lumière spatiale pour chaque direction de diffusion ; et
- normaliser les distributions d'intensité de lumière spatiales quant à une distribution d'intensité de lumière de la lumière diffusée ;

**caractérisé par** les étapes consistant à :

- soustraire les distributions d'intensité de lumière spatiales normalisées obtenues pour les différentes directions de diffusion par paires pour obtenir une distribution de différence d'intensité de lumière spatiale pour chaque paire des différentes directions de diffusion ;
- définir des axes de coordonnées par les directions de vecteurs de différence de paires de vecteurs d'ondes de la lumière diffusée pointant dans les différentes directions de diffusion ; et
- déterminer quantitativement une projection du champ des vitesses de l'écoulement de fluide dans la section de lumière sur chaque axe de coordonnée à partir de la distribution de différence d'intensité de lumière spatiale correspondante divisée par le module du vecteur de différence correspondant.

2. Procédé selon la revendication 1, **caractérisé en ce que** les modules de deux angles entre la section de lumière et chacune des deux directions de diffusion différentes d'au moins une paire des différentes directions de diffusion, pour lesquelles une distribution de différence d'intensité de lumière spatiale est obtenue, sont identiques.

3. Procédé selon la revendication 1 ou 2, **caractérisé en ce que** des distributions d'intensité de lumière spatiales normalisées sont obtenues pour quatre directions de diffusion différentes, les vecteurs de différence de trois paires des quatre directions de diffusion différentes s'étendant (a) parallèlement à la lumière laser éclairant la section de lumière, (b) perpendiculairement à la lumière laser éclairant la section de lumière, mais parallèlement à la section de lumière, et (c) perpendiculairement à la lumière laser éclairant la section de lumière et à la section de lumière.

4. Procédé selon l'une quelconque des revendications 1 à 3, **caractérisé en ce que**

- à l'étape d'éclairage, la feuille de lumière est éclairée dans la même direction avec une lumière laser à deux fréquences différentes ;
- à l'étape de conversion, un convertisseur fréquence-intensité ayant une fonction de transfert, qui est symétrique par rapport à une fréquence moyenne des deux fréquences différentes, est utilisé pour obtenir des distributions d'intensité de lumière spatiales séparées pour les deux fréquences différentes ; et
- à l'étape de normalisation, les distributions d'intensité de lumière spatiales normalisées sont définies en tant que rapports entre les différences des distributions d'intensité de lumière spatiales séparées pour les deux fréquences différentes et les sommes des différences des distributions d'intensité de lumière spatiales séparées pour les deux fréquences différentes de la lumière laser multipliés par la moitié de la différence de fréquence des deux fréquences différentes de la lumière laser.

5. Procédé selon la revendication 4, **caractérisé en ce que** la fonction de transfert du convertisseur fréquence-intensité a une forme de type gaussienne ayant une largeur à mi-hauteur égale à la différence de fréquence des deux fréquences différentes de la lumière laser.

6. Dispositif Doppler à laser pour mesurer un champ des vitesses d'un écoulement de fluide conformément au procédé selon l'une quelconque des revendications 1 à 5, comprenant :

- un laser pour éclairer une section de lumière s'étendant à travers l'écoulement de fluide avec une lumière laser ;
- un convertisseur fréquence-intensité pour convertir les distributions spatiales des décalages de fréquence Doppler de la lumière diffusée, qui est diffusée par les particules transportées par l'écoulement de fluide en-dehors de la section de lumière dans différentes directions de diffusion, en une distribution d'intensité de lumière spatiale pour chaque direction de diffusion ;
- une caméra pour chaque direction de diffusion pour détecter la distribution d'intensité de lumière spatiale ; et
- des moyens de normalisation pour normaliser les distributions d'intensité de lumière spatiales quant à une distribution d'intensité de lumière de la lumière diffusée ;

**caractérisé par** des moyens d'évaluation adaptés pour

- soustraire les distributions d'intensité de lumière spatiales normalisées obtenues pour les différentes directions de diffusion par paires pour obtenir une distribution de différence d'intensité de lumière spatiale pour chaque paire des différentes directions de diffusion ;
- définir des axes de coordonnées par les directions de vecteurs de différence de paires de vecteurs d'ondes de la lumière diffusée pointant dans les différentes directions de diffusion ; et
- déterminer quantitativement une projection du champ des vitesses de l'écoulement de fluide dans la section de lumière sur chaque axe de coordonnée à partir de la distribution de différence d'intensité de lumière spatiale correspondante divisée par le module du vecteur de différence correspondant.

7. Dispositif selon la revendication 6, **caractérisé en ce que** les modules de deux angles entre la section de lumière et chacune des deux directions de diffusion différentes d'au moins une paire des différentes directions de diffusion, pour lesquelles une distribution de différence d'intensité de lumière spatiale est obtenue, sont identiques.

8. Dispositif selon la revendication 6 ou 7, **caractérisé en ce que** des convertisseurs fréquence-intensité et des caméras sont prévus dans quatre directions de diffusion différentes, les vecteurs de différence de trois paires des quatre directions de diffusion différentes s'étendant (a) parallèlement à la lumière laser éclairant la section de lumière, (b) perpendiculairement à la lumière laser éclairant la section de lumière, mais parallèlement à la section de lumière, et (c) perpendiculairement à la lumière laser éclairant la section de lumière et à la section de lumière.

9. Dispositif selon l'une quelconque des revendications 6 à 8, **caractérisé en ce que**

- un modulateur de fréquence est prévu pour moduler la fréquence de la lumière laser provenant du laser pour éclairer la feuille de lumière dans la même direction avec une lumière laser à deux fréquences différentes ;
- le convertisseur fréquence-intensité une fonction de transfert, qui est symétrique par rapport à une fréquence moyenne des deux fréquences différentes, et est utilisé pour obtenir des distributions d'intensité de lumière spatiales séparées pour les deux fréquences différentes ; et
- les moyens de normalisation définissent les distributions d'intensité de lumière spatiales normalisées en tant que rapports entre les différences des distributions d'intensité de lumière spatiales séparées pour les deux fréquences différentes et les sommes des différences des distributions d'intensité de lumière spatiales séparées pour les deux fréquences différentes de la lumière laser multipliés par la moitié de la différence de fréquence des deux fréquences différentes de la lumière laser.

10. Dispositif selon la revendication 9, **caractérisé en ce que** la fonction de transfert du convertisseur fréquence-intensité a une forme de type gaussienne ayant une largeur à mi-hauteur égale à la différence de fréquence des deux fréquences différentes de la lumière laser.

Fig. 1

Fig. 2

**Fig. 3**

**Fig. 4**

**Fig. 5**

**Fig. 6**

**Fig. 7**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 567141

- US 4919536 A, Hiroshi Komine

**Non-patent literature cited in the description**

- **BELOUSOV ; DUBNISHCHEV.** Visualization of a Flow-Velocity Field. *Optika and Spectroscopy (USSR,* 1982, vol. 52, 524
- **SEILER F. ; GEORGE A. ; LEOPOLD F. ; HAVERMANN M. ; SRULIJES J.** Enhanced Doppler Picture Velocimetry (DPV) for Planar Velocity Measurements. *High Speed Shock Tunnel Flow. Proc. of the 10th International Symposium on Flow Visualization,* 2002

- **MILLER H. ; EGGERT M. ; PAPE N ; DOPHEIDE D. ; C.CZARSKE. ; BUTNER L. ; RAZIK T.** Time resolved DGV based on laser frequency modulation. *Conference Proceeding, 12th International Symposium on Applications of Laser Techniques to Fluid Mechanics,* 2004, 25-2